# EUROPÄISCHE PATENTSCHRIFT

(11) **EP 0 616 549 B1**
(45) Veröffentlichungstag und Bekanntmachung des Hinweises auf die Patenterteilung: **03.09.1997**
(21) Anmeldenummer: 92924479.6
(22) Anmeldetag: 07.12.1992
(51) Int. Cl.: B01D 33/11, B01D 33/41, B01D 33/46, B01D 33/50, B01D 33/64, B01D 33/76, B01D 53/56

(54) **VORRICHTUNG ZUM ABTRENNEN VON TEILCHENARTIGEM MATERIAL**
PARTICULATE MATERIAL SEPARATOR
SEPARATEUR DE MATERIAU PARTICULAIRE

(30) Priorität: 05.12.1991 AT 2423/91
(43) Veröffentlichungstag der Anmeldung: 28.09.1994
(73) Patentinhaber: KRIEGL, Maximilian, A-8570 Voitsberg (AT)
(72) Erfinder: KRIEGL, Maximilian, A-8570 Voitsberg (AT)
(74) Vertreter: Gibler, Ferdinand, Dipl.Ing. Dr. techn.
(86) Internationale Anmeldenummer: AT9200162
(87) Internationale Veröffentlichungsnummer: WO9311851

(56) Entgegenhaltungen:
- WO-A-90/12919
- DE-A- 479 674
- DE-A- 3 834 982
- FR-A- 2 663 240
- US-A- 5 160 441

## Beschreibung

Die Erfindung bezieht sich auf eine Vorrichtung zum Abtrennen von teilchenartigem Material aus einer strömenden teilchenhältigen Flüssigkeit, bei welcher eine erste, ein Trommelsieb aufweisende, und eine zweite Entwässerungseinrichtung vorgesehen ist, wobei die erste Entwässerungseinrichtung durch ein als antreibbares Trommelsieb ausgebildetes Gehäuse gebildet ist und die zweite Entwässerungseinrichtung eine antreibbare Förderschnecke aufweist, die in einem zumindest abschnittsweise mit Perforationen versehenen zylinderförmigen Gehäuse angeordnet ist.

Eine Vorrichtung dieser Art ist aus der DE-A-3 834 982 bekannt, bei welcher die Vorentwässerung derart erfolgt, daß die teilchenhaltige Flüssigkeit von außen auf ein sich drehendes Trommelsieb wirkt. Die erreichbare Vorentwässerungswirkung ist aber insofern begrenzt, als sich das Trommelsieb alsbald verstopfen und hierdurch nach und nach wirkungslos werden wird. Hohe Durchsatzmengen können daher nicht erreicht werden.

Ziel der Erfindung ist es, diese Nachteile zu vermeiden und eine Vorrichtung der eingangs erwähnten Art vorzuschlagen, bei der einerseits eine gute Trennung der festen Stoffe von der flüssigen Phase sichergestellt ist, und die einfach und kostengünstig herstellbar ist, sowie andererseits einen hohen Durchsatz aufweist.

Erfindungsgemäß wird dies dadurch erreicht, daß die erste Entwässerungseinrichtung mit einem Einlauf für die teilchenhältige Flüssigkeit versehen ist, sodaß besagtes Gehäuse der ersten Entwässerungseinrichtung von der teilchenhältigen Flüssigkeit unter teilweiser Entwässerung derselben in Längsrichtung durchströmt ist und daß zumindest der mit Perforationen versehene Abschnitt des zylinderförmigen Gehäuses der zwaten Entwässerungseinrichtung als antreibbares Trommelsieb ausgebildet ist.

Durch diese Maßnahmen wird erreicht, daß zuerst über die gesamte Länge des antreibbaren Trommelsiebes eine erste Trennung der festen Teilchen, wie etwa Steine, Haushaltsabfalle, Industrieabfälle, Rechen und/oder Siebgut und dgl, von der flüssigen Phase erfolgt, wobei feine Teilchen wie z.B. Schlammpartikel, Fäkalienpartikel und ähnliche in der flüssigen Phase verbleiben. Der Vortrieb der Feststoffe durch dieses antreibbare Trommelsieb, das im wesentlichen horizontal angeordnet ist, erfolgt dadurch, daß die teilchenhältige Flüssigkeit, die über einen Zulaufteil in das Trommelsieb einströmt, dieses durchströmt und dabei die festen Materialien mitnimmt. Da das Trommelsieb antreibbar ausgebildet ist und Perforationen über die gesamte Mantelfläche verteilt sein können, sind in einfacher Weise hohe Aussiebraten erreichbar, wobei auch in entsprechend einfacher Weise ein hoher Durchsatz bei weitgehenster Trennung der festen Teilchen von der flüssigen Phase realisiert wird.

Dabei kann in vorteilhafter Weise weiters vorgesehen sein, daß zwischen erster und zweiter Einrichtung zum Zwecke einer weiteren Entwässerung ein mit Perforationen ausgebildeter, bis zu dem Eintrittsbereich der zweiten Einrichtung reichender Trog angeordnet ist

Durch die Ausbildung eines perforierten Troges als Verbindungselement der beiden Einrichtungen ergibt sich der Vorteil, daß die Flüssigkeit zusätzlich durch diese Perforationen hindurchströmen kann und dadurch weitere feste Bestandteile aus der Flüssigkeit vor der Hauptentwässerung herausgefiltert werden, wobei sich die festen Materialien am Boden des Troges sammeln, wo sie in einfacher Weise erfaßt und weitertransportiert werden können.

In weiterer Ausgestaltung der Erfindung kann vorgesehen sein, daß die Längsachsen der ersten und zweiten Einrichtung einen Winkel, der vorzugsweise ca 140° beträgt, miteinander einschließen.

Durch diese Maßnahme wird in vorteilhafter Weise erreicht, daß die gesamte teilchenhältige Flüssigkeit mindestens einmal umgewälzt wird, also mindestens einmal entweder im Bereich Vor- bzw. Hauptentwässerungeinrichtung oder im Bereich des Troges durch die Perforationen hindurchtritt, so daß die festen Teilchen bevor sie aus der Flüssigkeit ausgetragen werden von eventuell anhaftenden Schlamm-, Fäkalienresten und dgl befreit werden und die Partikelreste in der Flüssigkeit verbleiben.

Nach einem weiteren Merkmal der Erfindung kann vorgesehen sein, daß an den Außenseiten der Trommelsiebe Sprühdüsen entlang jeweils mindestens einer, jedoch vorzugsweise entlang mehrerer, um 60° gegeneinander versetzter, Mantellinien angeordnet sind.

Durch diese Maßnahmen werden einerseits die Perforationen des antreibbaren Trommelsiebes stets gereinigt und frei von Partikelresten gehalten, so daß auf einfache Weise ein Zuschmieren bzw Zuwachsen der Perforationen verhindert wird, und andererseits die gesamte sich in der Vorrichtung befindliche Flüssigkeitsmenge zu einem zusätzlichen Strömen veranlaßt, was eine rasche Reinigung der Oberfläche der festen Teilchen von Partikeln jeder Art begünstigt.

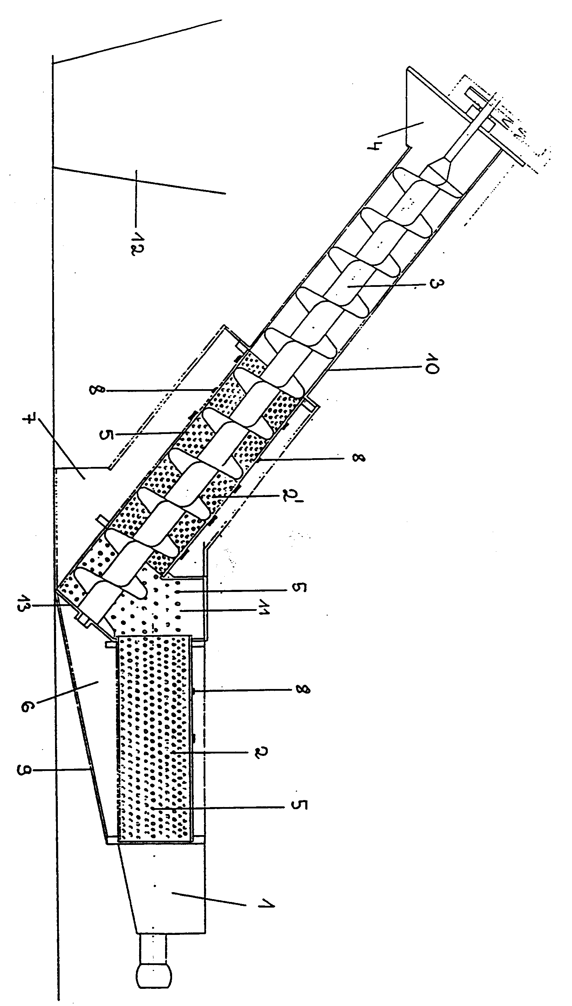

Die Erfindung wird nun anhand der Zeichnung näher erläutert, die schematisch eine erfindungsgemäße Vorrichtung zeigt.

Die Vorrichtung weist einen Einlauf 1 für mit Festkörpern versetzten Flüssigkeiten wie z.B. Abwässer aus Industrie und Haushalt, Kanälen und dgl auf, wobei der Einlauf 1 in einen schräg nach unten führenden Einlaufkasten 6 mündet. An den Einlauf 1 schließt mit seinem einen Ende ein antreibbares Trommelsieb 2 an, das mit seinem anderen Ende in einen Trog 11, der Perforationen 5 aufweist, einmündet. Das Trommelsieb 2 befindet sich dabei zur Gänze im Einlaufkasten 6.

Gegenüber dem Trommelsieb 2 mündet ein zylinderförmiges Gehäuse 10 in den Trog 11 ein, wobei das Gehäuse 10 und das Trommelsieb 2 einen Winkel von vorzugsweise etwa 140 Grad miteinander einschließen. Das Gehäuse 10 weist dabei einen Abschnitt mit Perforationen 5 auf, der ein weiteres Trommelsieb 2' der erfindungsgemäßen Vorrichtung bildet, wobei sich auch dieses Trommelsieb 2' zur Gänze im Einlaufkasten 6 befindet. Zumindest der Teil des Gehäuses 10 der durch das Trommelsieb 2' gebildet ist, ist antreibbar ausgebildet. Jedoch ist auch eine Variante der erfindungsgemäßen Vorrichtung vorsehbar, bei der das gesamte Gehäuse 10 antreibbar ist.

In dem Gehäuse 10 verläuft die Förderschnecke 3, die auch in den Bereich des Troges 11 hineinragt und in dessen einer Bodenfläche 13 drehbar gelagert ist.

Mittels der Förderschnecke 3 werden die Feststoffe aus dem Trog 11, sowie damit gleichzeitig aus dem Einlaufkasten 6, in dem der Trog 11 angeordnet ist, heraus und zum Austragende 4 hin befördert. Dabei werden die Feststoffe entlang der Förderstrecke mehrmals zuerst im Bereich des Einlaufkastens 6, der zum Teil mit der zulaufenden Flüssigkeit gefüllt ist, mit dieser durchmischt, wobei noch an den festen Teilchen haftende Partikel abgewaschen werden, und danach im Bereich von Sprühdüsen 8, die entlang einer, oder wie gemäß der Fig. zu ersehen ist, entlang mehrerer Mantellinien an den Außenseiten des Trommelsiebes 2' verlaufen, mit Spritzwasser aus den Sprühdüsen 8, das durch die Perforationen 5 in das Trommelsieb 2' eindringt, wobei es die Perforationen von Verschmutzungen befreit, vermengt, so daß die Feststoffe ein weiteres abschließendes Mal einer Reinigung von noch eventuell anhaftenden Partikeln unterzogen werden.

Um eine mehrfache Durchmischung der Feststoffe zu gewährleisten ist vorgesehen, daß die Förderschnecke 3 und zumindest der das Trommelsieb 2' des Gehäuses 10 mit vorzugsweise unterschiedlichen Drehzahlen und vorzugsweise in einander entgegengesetzten Drehrichtungen angetrieben sind.

In dem Teil des Gehäuses 10, der durch die geschlossene Wand gebildet wird, werden die Feststoffe beim Transport durch die Förderschnecke 3, sowie durch ihr eigenes Gewicht gegen die Gehäuseinnenwand und gegeneinander gepreßt, so daß sie weitgehenst von der Flüssigkeit bzw dem Spritzwasser entwässert werden.

Zum Austragende 4 gelangen dann von Partikeln gereinigte und annähernd trockene Festteilchen, die z.B. in Sammelbehältern 12 aufgefangen werden und gefahrlos entsorgt werden können.

Ebenfalls sind Sprühdüsen 8 an den Außenseiten des Trommelsiebes 2 entlang mindestens einer Mantellinie, oder, wie nicht in der Fig. dargestellt, entlang mehrerer um 60 Grad gegeneinander versetzter Mantellinien, vorgesehen, wodurch ein Zuschmieren bzw Zuwachsen der Perforationen 5 verhindert wird.

Durch das Trommelsieb 2 erfolgt eine erste Trennung der Feststoffe von den Partikeln, welche durch die zulaufende Flüssigkeit aus den Sprühdüsen 8, die Rotation des Trommelsiebes 2 und die Flüssigkeit im Einlaufkasten bewerkstelligt wird, indem die Feststoffe innerhalb des Trommelsiebes 2 mehrmals mit der sie umgebenden Flüssigkeit durchmischt werden. Der Transport der Festteilchen erfolgt dabei durch die im Einlaufkasten 6 herrschende Strömung vom Zulaufteil 1 zum Auslaufteil 7 hin.

Die Verbindung zwischen den beiden Trommelsieben 2 und 2' bildet dabei der Trog 11, durch dessen Perforationen 5 die im Einlaufkasten 6 befindliche Flüssigkeit ungehindert hindurchströmt, wobei sich die Festteilchen im Bodenbereich des Troges 11 sammeln.

Durch die erfindungsgemäße Vorrichtung wird eine rasche Trennung der festen Stoffe von der Flüssigkeit erreicht, wobei die Feststoffe von Partikeln gesäubert und annähernd trocken in einen Sammelbehälter gelangen.

## Patentansprüche

1. Vorrichtung zum Abtrennen von teilchenartigem Material aus einer strömenden teilchenhältigen Flüssigkeit, bei welcher eine erste, ein Trommelsieb (2) aufweisende und eine zweite Entwässerungseinrichtung vorgesehen sind, wobei die erste Entwässerungseinrichtung durch ein als antreibbares Trommelsieb (2) ausgebildetes Gehäuse gebildet ist und die zweite Entwässerungseinrichtung eine antreibbare Förderschnecke (3) aufweist, die in einem zumindest abschnittsweise mit Perforationen (5) versehenen zylinderförmigen Gehäuse (10) angeordnet ist, **dadurch gekennzeichnet,** daß die erste Entwässerungseinrichtung mit einem Einlauf (1) für die teilchenhältige Flüssigkeit versehen ist, sodaß besagtes Gehäuse der ersten Entwässerungseinrichtung von der teilchenhältigen Flüssigkeit unter teilweiser Entwässerung derselben in Längsrichtung durchströmt ist und daß zumindest der mit Perforationen (5) versehene Abschnitt des zylinderförmigen Gehäuses (10) der zweiten Entwässerungseinrichtung als antreibbares Trommelsieb (2') ausgebildet ist.

2. Vorrichtung nach Anspruch 1, **dadurch gekennzeichnet**, daß das Trommelsieb (2) der ersten Entwässerungseinrichtung über seine gesamte Mantelfläche mit Perforationen (5) versehen ist.

3. Vorrichtung nach Anspruch 1 und 2, **dadurch gekennzeichnet**, daß zwischen erster und zweiter Einrichtung zum Zwecke einer weiteren Entwässerung ein mit Perforationen (5) ausgebildeter, bis zu dem Eintrittsbereich der zweiten Einrichtung (3) reichender Trog (11) angeordnet ist.

4. Vorrichtung nach Anspruch 1, 2 oder 3, **dadurch gekennzeichnet**, daß die Längsachsen der ersten und zweiten Einrichtung einen Winkel, der vorzugsweise ca 140° beträgt, miteinander einschließen.

5. Vorrichtung nach einem der Ansprüche 1 bis 4, **dadurch gekennzeichnet**, daß an den Außenseiten der Trommelsiebe (2, 2') Sprühdüsen (8) entlang jeweils mindestens einer, jedoch vorzugsweise entlang mehrerer, um 60° gegeneinander versetzter Mantellinien angeordnet sind.

## Claims

1. Apparatus for the separation of particulate material from a flowing particle-containing liquid, in which a first dewatering device having a drum screen (2) and a second dewatering device are provided, the first dewatering device being formed by a housing designed as a drivable drum screen (2) and the second dewatering device having a drivable conveyor worm (3) which is arranged in a cylindrical housing (10) provided at least in some portions with perforations (5), characterized in that the first dewatering device is provided with an inlet (1) for the particle-containing liquid, so that the particle-containing liquid flows through the said housing of the first dewatering device in the longitudinal direction, the liquid being partially dewatered thereby, and in that at least that portion of the cylindrical housing (10) of the second dewatering device which is provided with perforations (5) is designed as a drivable drum screen (2').

2. Apparatus according to Claim 1, characterized in that the drum screen (2) of the first dewatering device is provided over its entire outer surface with perforations (5).

3. Apparatus according to Claims 1 and 2, characterized in that a trough (11) designed with perforations (5) and reaching as far as the inlet region of the second device (3) is arranged between the first and the second device for the purpose of further dewatering.

4. Apparatus according to Claim 1, 2 or 3, characterized in that the longitudinal axes of the first and the second device form with one another an angle which is preferably approximately 140°.

5. Apparatus according to one of Claims 1 to 4, characterized in that spray nozzles (8) are arranged on the outsides of the drum screens (2, 2'), in each case along at least one, but preferably along a plurality of outer surface lines offset at 60° relative to one another.

## Revendications

1. Appareil de séparation de matière du genre particules d'un liquide circulant contenant des particules, dans lequel sont prévus un premier dispositif de déshydratation présentant un tambour cribleur (2) et un deuxième dispositif de déshydratation, le premier dispositif de déshydratation étant formé d'un corps constituant un tambour cribleur entraînable (2) et le deuxième dispositif de déshydratation présentant une vis transporteuse entraînable (3) placée dans un corps cylindrique (10) pourvu au moins par endroits de perforations (5), caractérisé par le fait que le premier dispositif de déshydratation est pourvu d'une entrée (1) pour le liquide contenant des particules, de sorte que le corps du premier dispositif de déshydratation est parcouru dans la direction longitudinale par le liquide contenant des particules avec déshydratation partielle de celui-ci, et qu'au moins la partie pourvue de perforations (5) du corps cylindrique (10) du deuxième dispositif de déshydratation constitue un tambour cribleur entraînable (2').

2. Appareil selon la revendication 1, caractérisé par le fait que le tambour cribleur (2) du premier dispositif de déshydratation est pourvu de perforations (5) sur toute sa surface latérale.

3. Appareil selon l'une des revendications 1 et 2, caractérisé par le fait qu'entre les premier et deuxième dispositifs est placé, pour une déshydratation supplémentaire, une auge (11) pourvue de perforations (5) et allant jusqu'à la zone d'entrée du deuxième dispositif (3).

4. Appareil selon l'une des revendications 1, 2 et 3, caractérisé par le fait que les axes longitudinaux des premier et deuxième dispositifs font entre eux un angle qui est de préférence d'environ 140°.

5. Appareil selon l'une des revendications 1 à 4, caractérisé par le fait que des buses de pulvérisation (8) sont placées sur les côtés extérieurs des tambours cribleurs (2, 2') le long d'au moins une génératrice, de préférence le long de plusieurs génératrices espacées de 60°.
